# Europäisches Patentamt

# European Patent Office

# Office européen des brevets

(11) Veröffentlichungsnummer : **0 107 043**
**B1**

(12)

# EUROPÄISCHE PATENTSCHRIFT

(45) Veröffentlichungstag der Patentschrift :
20.08.86

(21) Anmeldenummer : 83109380.2

(22) Anmeldetag : 21.09.83

(51) Int. Cl.⁴ : **G 03 B 23/08, G 03 B 21/11,
B 65 H 3/24, B 65 H 5/18,
B 65 H 29/20**

(54) Übergabeeinrichtung.

(30) Priorität : 27.10.82 DE 3239703

(43) Veröffentlichungstag der Anmeldung :
02.05.84 Patentblatt 84/18

(45) Bekanntmachung des Hinweises auf die Patenterteilung : 20.08.86 Patentblatt 86/34

(84) Benannte Vertragsstaaten :
AT BE CH DE FR GB IT LI LU NL SE

(56) Entgegenhaltungen :
DE-A- 2 160 650
DE-A- 2 456 892
US-A- 4 025 177

(73) Patentinhaber : MAP Mikrofilm Apparatebau Dr.
Poehler GmbH & Co. KG
Schulstrasse 2
D-6352 Ober-Mörlen (DE)

(72) Erfinder : Dziemba, Peter, Ing. grad.
Ahornweg 17
D-6350 Bad Nauheim (DE)

(74) Vertreter : Schlagwein, Udo, Dipl.-Ing.
Anwaltsbüro Ruppert & Schlagwein Bahnhofsallee 11
D-6350 Bad Nauheim (DE)

Jouve, 18, rue St-Denis, 75001 Paris, France

EP 0 107 043 B1

**Beschreibung**

Die Erfindung bezieht sich auf eine Übergabeeinrichtung zum Überführen einer mit zwei gegenüberliegenden Kanten zwischen zwei Geradführungen geführten Filmkarte oder einer bezüglich ihrer Form vergleichbaren Karte von einer Position in eine andere, beispielsweise zum Überführen einer Filmkarte von einer Filmbühne in eine Filmkassette.

Eine Übergabeeinrichtung dieser Art ist in der DE-A-2 456 892 beschrieben. Die Übergabeeinrichtung gemäß dieser Schrift weist zum Transport der Karten zwei übereinander angeordnete, motorisch angetriebene Walzen auf, zwischen denen die zu transportierende Karte mit ihrer vordersten Kante geschoben werden muß, damit die Walzen anschließend die Karte in das Mikrofilmlesegerät fördern können. Ein automatisches Beschicken eines Mikrofilmlesegerätes mit Filmkarten aus einem Magazin ist bei der bekannten Übergabeeinrichtung nicht vorgesehen und wäre auch nur schwierig und umständlich zu verwirklichen. Man müßte dann die jeweilige Filmkarte zunächst mit einem Stößel aus dem Magazin bis in den Eingriffsbereich der Walzen schieben und auf gleiche Weise mit einem zweiten Stößel wieder vollständig zurück in das Magazin bewegen. Beides führt zu Problemen, da die Filmkarten sehr dünn sind. Ein weiterer Nachteil der bekannten Übergabeeinrichtung besteht darin, daß die Walzen über die gesamte Fläche der Karte angeordnet sind und dadurch auch der die Information enthaltende Kartenteil zerkratzen kann.

Bei Mikrofilmlesegeräten ist es seit längerem üblich, die Filmbühne motorisch zu verfahren, so daß automatisch ein mittels einer Tastatur angewähltes Bild vor das Objektiv gefahren werden kann. Es sind auch bereits weiter entwickelte Mikrofilmlesegeräte auf den Markt gelangt, bei denen ein automatischer, selektiver Filmkartenwechsel zwischen der Filmbühne und einem Magazin möglich ist. Bei einem Gerätetyp dieser Art sind die Filmkarten in einem Karussell magaziniert. Jede Filmkarte ist mit einem eine Codierung in Form von Kerben aufweisenden Klips versehen, wodurch die Selektion möglich wird. Durch einen relativ aufwendigen Mechanismus wird dann die jeweils gewünschte Filmkarte dem Karussell entnommen und in die Projektionseinrichtung bewegt, nachdem zuvor die dort vorhandene Filmkarte in das Magazin gefördert wurde.

Bei einem anderen Gerätetyp sind die Filmkarten in Folientaschen gehalten. Sie werden in diesen Folientaschen aufbewahrt und in die Filmbühne geschoben. Die Folientaschen haben Nasen, ähnlich wie bei Karteikarten, mittels der die Selektion erfolgt. Die Praxis hat gezeigt, daß solche Folientaschen leicht sowohl sich selbst als auch die Filmkarte zerkratzen. Sie führen weiterhin zu einem milchigen, unscharfen Bild im Mikrofilmlesegerät und sind die Ursache für newtonsche Ringe.

Solche Probleme könnten vermieden werden, wenn zum Beispiel ein als Kassette ausgebildetes Magazin höhenverfahrbar angeordnet würde und die jeweiligen Filmkarten einfach aus dem Magazin geradlinig in die Filmbühne geschoben werden könnten, bzw. umgekehrt, eine Filmkarte geradlinig von der Filmbühne ins Magazin. Man könnte dann auf eine Codierung der Filmkarten verzichten und einfach das Magazin in diejenige Stellung verfahren, in der die gewünschte Filmkarte mit der Filmbühne fluchtet.

Eine Einrichtung dieser Art mit in Schlitzen stehend geführten Filmkarten ist ebenfalls bekannt. Problematisch bei einer solchen Einrichtung ist jedoch die Gestaltung der Übergabeeinrichtung. Üblicherweise wird man, wie zum Beispiel bei Kopiergeräten, an ein Walzenpaar zum Transport der Filmkarten denken. Da ein solches Walzenpaar jedoch aus Platzgründen nicht zwischen die magazinierten Filmkarten greifen und eine Filmkarte herausziehen kann, ist zusätzlich ein Stößel erforderlich, der die jeweilige Filmkarte aus dem Magazin bis in den Einzugsbereich des Walzenpaares schiebt. Weiterhin muß eine Einrichtung vorgesehen werden, welche die Filmkarte nach Verlassen des Walzenpaares bis in eine Endstellung auf der Filmbühne oder bei umgekehrter Förderrichtung ins Magazin schiebt. Da die Filmkarten oft sehr dünn sind, bereitet es Schwierigkeiten, sie mit Stößeln zuverlässig zu verschieben. Weiterhin muß die Bewegung der Stößel koordiniert und überwacht werden, was erheblichen, konstruktiven Aufwand bedingt.

Der Erfindung liegt die Aufgabe zugrunde, eine Übergabeeinrichtung der eingangs genannten Art zu schaffen, die besonders einfach und platzsparend gestaltet ist und Filmkarten oder vergleichbare Gegenstände möglichst reibungsarm transportiert, so daß es nicht zu einem Verklemmen kommen kann, was zum Beispiel beim Papiertransport in Kopiergeräten immer wieder vorkommt.

Diese Aufgabe wird erfindungsgemäß durch die im Anspruch 1 angegebenen Maßnahmen gelöst.

Dadurch, daß die erfindungsgemäße Übergabeeinrichtung statt übereinander angeordnete Walzen zwei in einem spitzen Winkel zueinander stehende Scheiben hat, weist sie nur eine geringe Bauhöhe auf, so daß sie in der Lage ist, zwischen abgelegten Filmkarte in ein kassettenförmiges Magazin zu fahren. Dadurch kann die Übergabeeinrichtung dort die Filmkarten unmittelbar greifen, so daß auf die Verwendung von zusätzlichen Transporteinrichtungen, wie zum Beispiel Stößel, verzichtet werden kann.

Von Vorteil ist auch, daß die Übergabeeinrichtung die Filmkarte nur an einer Seite greift und fördert. Dadurch wird die Filmkarte nicht dort berührt, wo sie Information enthält, so daß es nicht zu einem Verkratzen des wichtigen Bereiches der Filmkarte kommen kann.

Da die Übergabeeinrichtung den Übergabebereich, abgesehen von einem schmalen Seitenbereich völlig frei läßt, ist eine automatische Überwachung dieses Übergabebereiches durch optoelektronische Sensoren leicht zu verwirklichen.

Die erfindungsgemäße Übergabeeinrichtung kann, abgesehen von Mikrofilmlesegeräten, auch für zahlreiche andere Einrichtungen Anwendung finden. Sie könnte zum Beispiel in einer Vorrichtung zum Laden einer Filmkartenkassette eingesetzt werden.

Die erfindungsgemäße Übergabeeinrichtung ermöglicht es, eine Kassette für Filmkarten so zu gestalten, daß sie nur zu einer Seite hin offen ist. Eine solche Kassette kann leicht an beiden Seitenwänden gegriffen und in ein Mikrofilmlesegerät eingesetzt werden. Ihre Rückwand steht voll für eine Beschriftung zur Verfügung.

Von Vorteil ist es bei der erfindungsgemäßen Übertragungseinrichtung auch, daß bei ihr nur eine einzige Einheit bewegt und angetrieben werden muß. Es sind keine räumlich voneinander getrennt anzuordnende und anzutreibende, sowie in ihrem Bewegungsablauf schwierig zu koordinierende Mechanismen erforderlich.

Durch die im Anspruch 2 angegebene vorteilhafte Ausgestaltung der Erfindung wird erreicht, daß die beiden Scheiben sich beim Transport einer Filmkarte derart über die zwischen ihnen eingeklemmte Filmkarte aufeinander abstützen, daß die Filmkarte nicht genau parallel zu ihren Geradführungen geschoben, sondern zugleich etwas in Richtung zu derjenigen Geradführung gedrückt wird, die auf der Seite der Übergabeeinrichtung liegt. Die Filmkarte gleitet dadurch, abgesehen vom Moment des Einzugs in das Scheibenpaar, entlang der scheibenpaarseitigen Geradführung. Dadurch wird ein Verklemmen der Filmkarte in ihrer Geradführung wirkungsvoll verhindert und zwar selbst dann, wenn die Filmkarte infolge von Breitentoleranzen beträchtlich viel Spiel in ihren Geradführungen hat. Würde das Scheibenpaar die Filmkarte umgekehrt gegen die gegenüberliegende Geradführung drücken, dann würde die Filmkarte dort hängenbleiben und zur Mitte hin ausbeulen.

Technisch ist es leicht durchzuführen, daß bei geändertem Drehsinn die obere Scheibe in die richtige Lage kippt, so daß keine aufwendige Steuerung oder Mechanik erforderlich wird.

Selbst wenn es zu einem Verklemmen einer Filmkarte kommen sollte, dann ist die hängengebliebene Filmkarte leicht von Hand zu entfernen, wenn die Übergabeeinrichtung, wie im Anspruch 3 angegeben, gestaltet ist, weil bei ihr keine Antriebselemente oder die Übertragungseinrichtung selbst sich im Transportweg der Filmkarte befinden. Dadurch ist die Filmkarte stets leicht zugänglich. Die elektrische Steuerung der Übertragungseinrichtung kann so gestaltet sein, daß bei einem Hängenbleiben einer Filmkarte die Steuerung stromlos geschaltet wird und die Übertragungseinrichtung dann außerhalb der Bewegungsbahn der Filmkarte schwenkt.

Die im Anspruch 4 angegebenen Finger drücken beim Einfahren der Übergabeeinrichtung in eine Kassette mit Filmkarten die benachbarten Filmkarten weg, so daß das Scheibenpaar der Übergabeeinrichtung die ausgewählte Filmkarte greifen kann.

Die Erfindung läßt zahlreiche Ausführungsformen zu. Zu ihrer Verdeutlichung ist eines davon stark schematisch in der Zeichnung dargestellt und wird nachfolgend beschrieben. Es zeigen

Figur 1 eine schematische Draufsicht auf eine Filmbühne eines Mikrofilmlesegerätes und eine Filmkartenkassette sowie die erfindungsgemäße Übergabeeinrichtung,

Figur 2 eine Ansicht von der Seite auf den vorderen Teil der Übergabeeinrichtung,

Figur 3 eine Draufsicht auf die Anordnung gemäß Figur 2,

Figur 4 und 5 einen Blick auf den vorderen Teil der Übergabeeinrichtung vom Mikrofilm aus gesehen, in räumlicher Darstellung, wobei die Mikrofilmfördereinrichtung in beiden Darstellungen unterschiedlich ist.

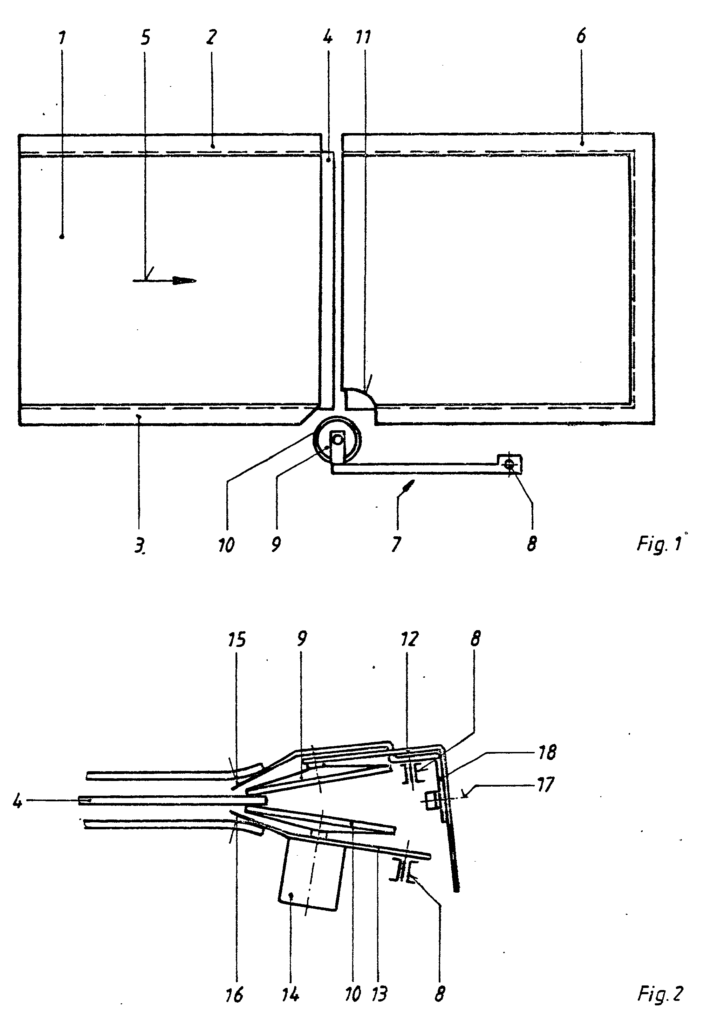

Die Figur 1 zeigt schematisch im linken Teil eine Filmbühne 1, welche an zwei gegenüberliegenden Seiten jeweils eine Geradführung 2, 3 hat. Durch diese Geradführungen 2, 3 ist eine Filmkarte 4, auch Mikrofiche genannt, in Richtung des eingetragenen Pfeils 5 verschieblich auf der Filmbühne 1 gehalten.

Neben der Filmbühne 1 ist eine Kassette 6 angeordnet, in die ähnlich wie bei einem Diamagazin die Dias Filmkarten 4 nebeneinander eingeschoben werden können. Die Kassette 6 ist quer zur Ebene der Zeichnung höhenverfahrbar, so daß jede beliebige Filmkarte 4 in der Kassette 6 in eine zur Filmbühne 1 fluchtende Stellung gebracht werden kann.

Eine Transporteinrichtung 7 befindet sich an einer Seite der Filmbühne 1 unmittelbar vor der Geradführung 3 und vor der Kassette 6. Sie ist um eine Achse 8 schwenkbar, so daß zwei Scheiben 9, 10 die Filmkarte 4 greifen und in die Kassette 6 transportieren können. Die Kassette 6 hat an der der Transporteinrichtung 7 zugewandten Seite eine bogenförmige Aussparung 11, so daß die Transporteinrichtung 7 Filmkarten bis in die Kassette 6 hineinfördern, bzw. aus der Kassette 6 entnehmen kann.

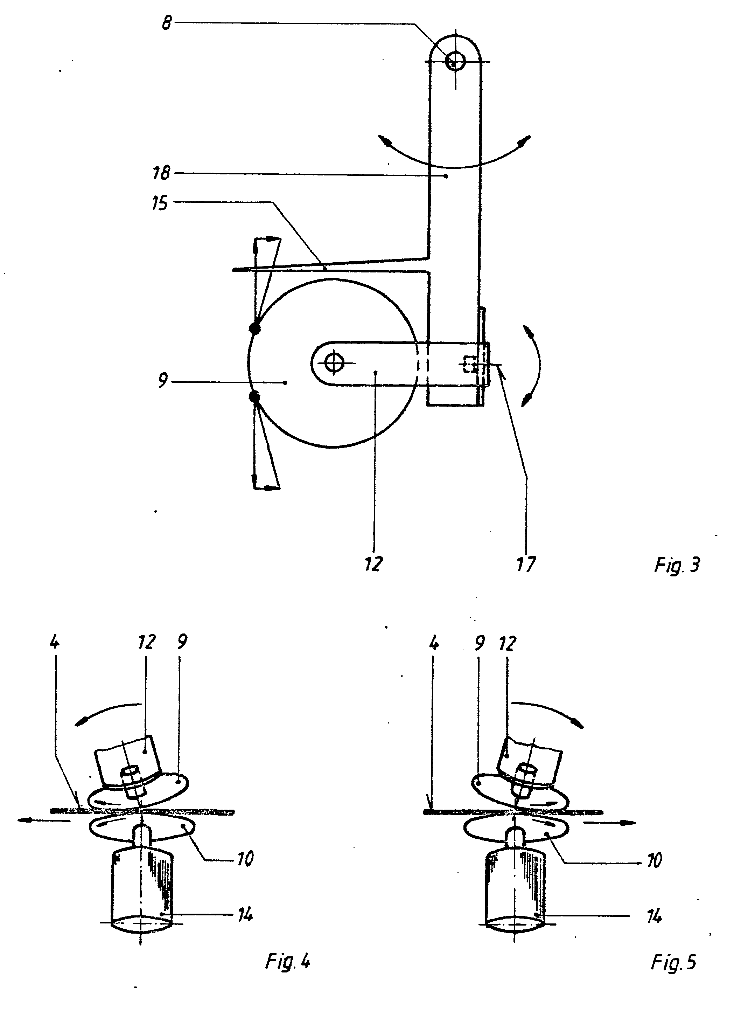

Die genauere Darstellung und Funktionsweise der Transporteinrichtung 7 ist anhand der Figuren 2 und 3 deutlicher zu erkennen. Die Transporteinrichtung 7 ist als Zange ausgebildet und hat zwei Backen 12, 13, welche wie bei einer Zange aufeinanderzu bewegbar sind, was entweder durch ein Gelenk, aber auch auf beliebige andere, dem Fachmann geläufige Art und Weise geschehen kann. Die obere Backe 12 lagert drehbar die Scheibe 9, während die untere Backe 13 drehbar die Scheibe 10 lagert. Letztere wird von einem Motor 14 wahlweise in der einen oder anderen Drehrichtung angetrieben. Um beim Greifen der Filmkarte 4 in einer Kassette 6 die beiden benachbarten Filmkarten wegspreizen zu können, damit die Scheiben 9, 10 eine Filmkarte 4 zu greifen vermögen, ist jeder der Backen 12, 13 jeweils ein Finger 15, 16 zugeordnet, der sich jeweils nach vorn, also in Richtung der Filmkarte verjüngt. Die Figur 2 läßt weiterhin erkennen, daß die Ebenen der Scheiben 9 und 10 beim Greifen einer Filmkarte 4 in einem spitzen Winkel zueinander stehen.

Ein weiteres für die Erfindung wesentliches Merkmal ist in den Figuren 3 und 4 dargestellt. Die Scheibe 9 ist, abgesehen von ihrer Schwenkbarkeit in Spannebene, noch quer zur Spannebene um eine Achse 17 nach beiden Seiten begrenzt schwenkbar. Das hat zur Folge, daß der Abstützpunkt der Scheibe 9 über die Filmkarte 4 auf der Scheibe 10, wie in Figur 3 angedeutet, sich etwas in die jeweilige Förderrichtung verlagert. Dadurch wird eine Filmkarte 4 durch die Scheiben 9 und 10 nicht genau in Förderrichtung kraftbeaufschlagt, sondern etwas in Richtung der Transporteinrichtung 7. Diese Verhältnisse wurden durch zwei eingezeichnete Kräfteparallelogramme angedeutet. Durch diese Verlagerung der Andrückpunkte wird die jeweilige Filmkarte 4 gegen die Geradführungen auf der Seite der Transporteinrichtung 7 gehalten.

Bei der dargestellten, konkreten Ausführungsform ist der Backen 12 an einem Arm eines Hebels 18 schwenkbar angebracht. Der andere Arm dieses Hebels 18 ist an einem feststehenden Bauteil mittels der Achse 8 angelenkt. Entsprechend ist der Backen 13 mittels eines Hebels an einem feststehenden Bauteil angelenkt, wobei die Achsen und der Anlenkpunkt so gewählt sind, daß die Backen 12, 13 sich einander annähern, wenn sie in Richtung der Filmkarte 4 geschwenkt werden.

Die Funktionsweise der Übergabeeinrichtung ist anschaulich in den Figuren 4 und 5 zu erkennen. Bei der Darstellung in Figur 4 dreht sich der Motor 14 in einem solchen Drehsinn, daß die Filmkarte 4 in der Zeichnung gesehen nach links gefördert wird. Die Scheibe 9 ist durch Verschwenkung des Backens 12 um die in den Figuren 2 und 3 gezeigte Achse 17 derart verschwenkt, daß sie sich an einem Punkt auf der Filmkarte 4 abstützt, der gegenüber der Mittellinie der Scheibe 10 etwas in Förderrichtung versetzt ist.

Wird die Fördereinrichtung umgekehrt, dann wird der Backen 12 mit der Scheibe 9 in umgekehrter Richtung verschwenkt, was in Figur 5 gezeigt ist. Das Verschwenken erfolgt jeweils um die Achse 17 und kann mittels eines einfachen Hubmagneten und einer Zugfeder erfolgen, indem die Zugfeder den Backen in eine Endstellung und der Hubmagnet bei Erregung in die andere Endstellung zieht. Denkbar ist auch, die Achse 17 so anzuordnen, daß der Backen 12 von selbst bei Umkehr der Förderrichtung zur richtigen Seite hin schwenkt.

**Patentansprüche**

1. Übergabeeinrichtung zum Überführen einer mit zwei gegenüberliegenden Kanten zwischen zwei Geradführungen geführten Filmkarte oder einer bezüglich ihrer Form vergleichbaren Karte von einer Position in eine andere, beispielsweise zum Überführen einer Filmkarte von einer Filmbühne in eine Filmkassette, dadurch gekennzeichnet, daß zum Greifen und Fördern der Karte (4) am übergabeseitigen Ende einer Geradführung (3) eine in Richtung der Ebene der Karte (4) und quer zu deren geführten Kanten auf diese zu bewegbare Transporteinrichtung (7) vorgesehen ist, welche zwei zangenartig gegen die Karte (4) bewegbare und diese zwischen sich greifende, in Greifstellung mit ihren Ebenen zueinander in einem spitzen Winkel stehende, um ihre Achsen drehbare Scheiben (9, 10) aufweist, von denen zumindest eine Scheibe von einem im Drehsinn umsteuerbaren Motor (14) angetrieben ist.

2. Übergabeeinrichtung nach Anspruch 1, dadurch gekennzeichnet, daß nur an einer Scheibe (10) ein Motor (14) vorgesehen ist und die Achse der anderen Scheibe (9) derart begrenzt schwenkbar angeordnet ist, daß sich der Greifpunkt zwischen den beiden Scheiben in die jeweilige Förderrichtung verschieben kann.

3. Übergabeeinrichtung nach Anspruch 1 oder 2, dadurch gekennzeichnet, daß die Transporteinrichtung (7) in Ruhestellung durch Federkraft außerhalb der Bewegungsbahn der Karte (4) gehalten ist.

4. Übergabeeinrichtung nach einem der Ansprüche 1 bis 3, dadurch gekennzeichnet, daß die Transporteinrichtung (7) an zwei die Scheiben (9, 10) lagernden Backen (12, 13) außenseitig jeweils einen über die Scheibe hinausreichenden, der Karte (4) zugewandten und sich zur Karte (4) hin verjüngenden Finger (15, 16) aufweist.

**Claims**

1. Transfer device for transmitting a film card or a card with similar shape, having two opposite sides guided between two straightforward directed guides from one position to another, for instance from a film platform to a film magazine, caracterized in that for gripping and moving the card a transport device is provided at the transfer end of one guide, movable in the plane and transversely to the guided sides of the card in the direction of the card, comprising two disks which are rotatable about their axes and movable towards the card, being capable to grip the card between themselves like tongs, in a gripping position standing with their planes mutually at an acute angle, whereby at least one disk is driven by a motor in a reversible direction of rotation.

2. Transfer device as defined in claim 1, caracterized in that only one disk is provided with a motor and that the axis of the other disk is arranged limitedly pivotable so that the bracing point is shifted between the two disks into the respective direction of transport.

3. Transfer device as defined in claim 1 or 2, caracterized in that the transport device is maintained outside the movement path of the film card in a rest position by spring force.

4. Transfer device as defined in one of the claims 1-3, caracterized in that the transport device comprises at the two jaws, which are supporting the disks, a pair of pawls, tapering forward towards and facing the film card and projecting over the disks.

## Revendications

1. Dispositif de transfert permettant de transporter d'une position dans une autre une microfiche ou une carte comparable quant à sa forme, guidée par deux bords opposés entre deux guidages droits, par exemple de transporter une microfiche d'un passe-vue de lecteur de microfiche dans une cassette à microfiches, caractérisé en ce qu'on prévoit un dispositif de transport (7) déplaçable vers la microfiche ou carte (4) et transversalement à ses bords guidés, pour la préhension et le transport de la microfiche ou carte (4) à l'extrémité de transfert d'un guidage droit (3), ce dispositif comportant deux disques (9, 10) pouvant tourner autour de leur axe et qui sont déplaçables vers la microfiche ou la carte (4) comme une pince et saisissent entre eux, dans la position de préhension la microfiche (4) en formant ensemble un angle aigu avec leurs plans, l'un des disques au moins étant entraîné par un moteur (14) dont le sens de rotation peut être inversé.

2. Dispositif de transfert selon la revendication 1 caractérisé en ce qu'on ne prévoit un moteur (14) que sur l'un des disques (10) et en ce que l'axe de l'autre disque (9) est disposé de manière à ne pouvoir pivoter que de façon limitée de sorte que le point de préhension entre les deux disques peut se déplacer dans la direction de transport correspondante.

3. Dispositif de transfert selon les revendications 1 ou 2 caractérisé en ce que le dispositif de transport (7) est maintenu en position de repos en dehors du trajet de déplacement de la microfiche (4) par l'action d'un ressort.

4. Dispositif de transfert selon l'une des revendications 1 à 3 caractérisé en ce que le dispositif de transport (7) comporte extérieurement sur deux branches (12, 13) supportant les disques (9, 10) chaque fois un doigt (15, 16) faisant saillie au-delà du disque, dirigé vers la microfiche (4) et se rétrécissant en direction de cette microfiche (4).

Fig. 1

Fig.2

Fig. 3

Fig. 4

Fig. 5

2